# EUROPEAN PATENT SPECIFICATION

(11) **EP 3 059 572 B1**
(45) Date of publication and mention of the grant of the patent: **23.12.2020**
(21) Application number: 16275020.2
(22) Date of filing: 05.02.2016
(51) Int. Cl.: G01N 1/22, G01N 1/26, G01N 1/24

(54) **SAMPLING APPARATUS AND METHOD OF USE THEREOF**
PROBENAHMEVORRICHTUNG UND VERFAHREN ZUR VERWENDUNG DAVON
APPAREIL D'ÉCHANTILLONAGE ET SON PROCÉDÉ D'UTILISATION

(30) Priority: 18.02.2015 GB 201502714
(43) Date of publication of application: 24.08.2016
(73) Proprietor: GDS Technologies Ltd, Leeds, Yorkshire LS25 2GA (GB)
(72) Inventor: UTLEY, Steven, Leeds, Yorkshire LS25 2GA (GB)
(74) Representative: Corbyn, David Jonathan

(56) References cited:
- EP-A1- 0 971 223
- CA-A1- 2 886 675
- JP-A- 2000 046 703
- US-A- 3 486 382
- US-A- 4 047 437
- US-A- 5 058 440
- US-A1- 2004 202 574
- US-A1- 2013 291 622
- Kazuo Dairaku ET AL: "COMMUNICATIONS TO THE EDITOR Use of the Porous Teflon Tubing Method to Measure Gaseous or Volatile Substances Dissolved in Fermentation Liquids INTRODUCTION", Biotechnology and bioengineering, 31 December 1979 (1979-12-31), pages 1671-1676, XP055283929, Retrieved from the Internet: URL:http://onlinelibrary.wiley.com/store/1 0.1002/bit.260210912/asset/260210912_ftp.p df?v=1&t=ipy4e4ro&s=a147b54212e8ab6a680012 5e6060cd1789750bba [retrieved on 2016-06-27]

## Description

The invention to which this application relates is a sampling apparatus and a method of use thereof.

Although the following description refers mainly to an apparatus and method of use for a gas sampling line used for general atmospheric monitoring/sampling, the person skilled in the art will appreciate that the present invention can also be employed in numerous other specialist uses, such as fire (smoke) detection, fume/particulate/ environmental monitoring and would be applied as per below.

Gas monitoring and gas detection systems are used to sample atmospheric conditions in a particular area or region, and may also be designed for the purpose of protecting personnel from toxic, flammable and asphyxiant gases. Such systems have wide applicability commercially and in industry. The detection systems generally comprise two distinct parts: a sampling means in the form of a pipeline, pipe, tube and/or the like, which is extended into a particular area of interest where the atmosphere/certain gases are to be measured/sampled etc.; and a central unit (a sample draw control panel) that includes a computer microprocessor (CPU) and calculates/monitors/ records the levels of gases present in the target area, subsequently providing read-outs, warnings and/or the like to a user concerning that particular detection area.

Gas enters the sampling means and passes therealong to the central unit for detection, where the gas/atmospheric contents are measured/assessed etc. Gas enters the sampling means and passes along to the central unit by means of vacuum suction, provided by a vacuum pump at or connected to the central unit. Currently, two distinct methods are used for atmospheric sampling. The first method is known as "Point Sampling". Point sampling involves locating a single gas intake point located at an end of a pipe or tube. At the other end of the tube a vacuum is applied, thereby drawing an atmospheric sample from the target area. The gas intake point may be protected by an end-of-line particulate filter or water trap device. However, this method of atmospheric sampling has significant drawbacks as the sample area coverage is extremely limited. Therefore, any sample reading acquired may not be a true reflection of the atmosphere in a particular area as a whole. Furthermore, the provision of only a single intake means there is also a significant risk of particulate contamination causing intake blockage and a subsequent loss of system operation.

The second method used for atmospheric sampling is known as "Area Sampling". Area sampling involves providing a sample pipeline that has multiple intakes along its length. The further the intakes are located from the vacuum unit along the pipeline length, the larger the diameter of the intake. This is done so as to compensate for the weakening vacuum suction that will be apparent at the intakes as the distance from the vacuum unit increases, i.e., the weakening vacuum suction that will be applied to the n^{th} intake a certain distance along the pipeline. Hole diameters of the intakes generally range from 1mm increasing to 20mm. The limiting factors of this particular method are that it becomes extremely difficult to attain a balanced and even sample collection through the intakes along the pipe length. Consequently, the pipe length is normally fixed and limited to approximately 10 metres, significantly reducing the range of the area that may be sampled. Furthermore, the pipe is also constructed from a plastics material setting it in a straight line and with very little flexibility.

US 2013/291622 A1 discloses a system for collecting gas and for measuring gas flux emitted from a surface area over a period of time. The system comprises a flexible sampling tube with gas collection openings. The gas collection openings are covered with a semi-permeable membrane. The system further comprises a gas pump for delivering the sampled gas into an analyzer.

US 3 486 382 A discloses a continuous sampling method and apparatus for withdrawing samples from gas streams. The apparatus comprises a rigid probe, wherein the outer tubular portion of the probe is porous and of uniform porosity to withdraw a representative sample from the gas streams. The apparatus further comprises a vacuum pump for drawing gas through the pores of the outer tubular portion. Further examples of prior art devices are shown in the following documents: JP 2000 046703 A, US 5 058 440 A, US 2004/202574, CA 2 886 675 A1 and US 4 047 437 A.

It is therefore an aim of the present invention to provide an improved sampling means for a gas sampling and/or detection system that overcomes the aforementioned problems associated with the prior art.

It is a further aim of the present invention to provide a gas sampling and/or detection system including gas sampling means that overcomes the aforementioned problems associated with the prior art.

It is yet a further aim of the present invention to provide a method of using a gas sampling and/or detection system including gas sampling means that overcome the aforementioned problems associated with the prior art.

It is yet a further aim of the present invention to provide a method of retrofitting existing gas sampling and/or detection systems with an improved sampling means that overcomes the aforementioned problems associated with the prior art.

The invention is set out in the appended claims. According to a first aspect of the invention there is provided gas sampling means for use with a gas sampling system, said gas sampling means provided to sample atmospheric conditions in a particular area or region, and including: a vacuum pump; at least one tube, wherein said tube is a sample tube; means to connect at least a first end of said tube to a central control unit of a gas sampling system and/or the vacuum pump; wherein the tube is formed from a porous and flexible material and wherein the porous material has an even porosity along its length and surface area, such that upon application of a vacuum thereto, the drawing of even and consistent atmospheric samples from the full surface area is permitted.

Typically, the substantially even porosity of the porous material allows a substantially even draw/suction/vacuum and/or the like through pores of the same.

The present invention therefore has the advantage of providing a novel gas sampling means that overcomes the aforementioned problems associated with the prior art: the porosity of the tube ensures, when a vacuum is applied thereto, not only that intakes are provided along substantially the entire length of the tube resulting in samples being taken from the entire area as opposed to a single point, but also that the air/gas intake at all the intake points is balanced and even, thereby provided a far more accurate reading to a user when sampling a particular area.

Providing a sampling means that were flexible has significant advantages over the prior art, in particular, the area sampling method wherein only rigid, straight lengths can be used. The flexible nature of the tube allows the sampling means to access an increased range of areas.

In one embodiment, a second or distal end of the tube is provided with blocking means. Typically, said blocking means is provided to prevent mass intake of air at an otherwise open end of the tube (such as that provided in point sampling). Blocking an end of the tube that is not connected to the central unit and/or vacuum ensures that the vacuum, when applied, is applied evenly throughout the interior of the tube. This subsequently allows a sample to be drawn in from the exterior of the tube through the porous material of which it is constructed at an even rate across substantially the entire length of the tube.

The length of tube is variable to suit the requirements of a user. The added advantage of using such a porous material for the tube, in particular, if it is also flexible, is that the length of the tube can be significantly longer than those provided for in the prior art. For example, it may have a length upward of 200 metres. The primary limiting factor of the length of the tube is the power of the vacuum pump. Increased length of tube means more air to be removed and, thus, a more powerful vacuum.

In one embodiment, the tube may include one or more branches, junctions and/or the like extending therefrom. Typically, said branches, junctions and or the like provide access to an increased and/or separate area or areas for sampling. Further typically, ends of the branches, junctions and or the like are provided with blocking means.

In one embodiment, the tube is provided as having a continuous loop or loops incorporated into its length. Typically, said continuous loop or loops negate the requirement for a second end and the provision of blocking means therein.

In one embodiment, the porous material forming the tube has a pore size of between 0.2nm and 1000µm. The porous material may be a microporous material, having a pore size of between 0.2nm and 2nm. The porous material may be a mesoporous material, having a pore size of between 2nm and 50nm. The porous material may be a macroporous material, having a pore size of between 50nm and 1000nm. Preferably, the porous material has a pore size of between 0.01µm and 1000µm. More preferably the porous material has a pore size of between 1µm and 1000µm.

In one embodiment, said gas sampling means are provided with protecting means, extending along at least a part thereof. Typically, said protecting means are provided in the form of an outer sheath. Further typically, at least a part of said length of tube is located within the outer sheath.

A plurality of protecting means may be provided at a plurality of sections along the length of tube. In one embodiment, said outer sheath is of a tubular form, having an interior diameter greater than or substantially equal to an exterior diameter of the said length of tube. The diameter of the tube may be substantially consistent along the length of the tube. Typically, said outer sheath is provided with a plurality of apertures located therealong. Thus, the outer sheath provides a protective barrier for the length of tube when it is to be located in areas where such protection may be required. This will help to prevent or at least significantly reduce the likelihood of loose debris or other material at least partially crushing the length of tube, which may inhibit the vacuum being applied to the tube and, consequently, the ability to draw in samples from the surrounding atmosphere evenly across substantially the entire length of the tube. Furthermore, the outer sheath is provided with an interior diameter greater than an exterior diameter of the said length of tube and/or a plurality of apertures located therealong such that it does not inhibit the intake of a sample from the surrounding atmosphere by the sampling means.

The plurality of apertures located on the outer sheath may be variable in shape and size to accommodate the particular environment into which the sampling means is to be located. Typically, the said apertures are provided of a size and quantity that will be sufficient so as to prevent a restriction of sample flow should one or more of the said apertures become blocked.

The protecting means may be formed from a metal or plastics material. Typically, protecting means are formed from a substantially water and/or fire resistant material. Typically, said protecting means is formed as a substantially rigid member. Further typically, said protecting means are provided in the form of a substantially rigid outer sheath.

The protecting means may be formed in various lengths, shapes and/or sizes appropriate to the length of tube to be used and the environment into which it is to be located. Typically, said protecting means may be formed in numerous sections to be located at or along specific sections of the length of tube.

In one embodiment, the gas sampling means may comprise two or more lengths or sections of tube. Typically, said two or more lengths of tube are connected to one another in series or sequence. Thus, the provision of the ability to connect two or more lengths of tube together allows a user to increase the length of the sampling means and, consequently, the area that may be sampled, without the need to source a specific length of tube.

Typically, said two or more lengths of tube are connected to one another to form one or more branches and/or a network of tube. Further typically, two or more lengths of tube may be connected to one another both to increase the overall length of the tube and to form one or more branches and/or a network of tube.

In one embodiment, two or more lengths or tube are connected to one another by connecting means. Typically, said connecting means allow for the extension of the overall length of tube. Further typically, said connecting means may allow for the provision of branches and/or junctions of one or more additional lengths of tube. Further typically, said connecting means can have a substantially I, T, Y, X, + shape and/or the like.

In one embodiment, the gas sampling means further comprises a tubular draw line. Said tubular draw line is formed from a non-porous material.

Further typically, said draw section is located substantially between the sampling tube and the means to connect the at least a first end of said tube to the central unit of a gas sampling system and/or a vacuum.

In one embodiment, at least part of said draw section is formed from a non-porous material. Typically, substantially all of said draw section is formed from a non-porous material. Further typically, at least part or substantially all of said draw section is formed from nylon.

The sampling section is formed from porous material. The porous material has a substantially even porosity along substantially the length of the same.

It will be appreciated that interior and exterior diameters of the length of tube may be tailored to suit a particular environment and, as such, there are no predefined minimum or maximum ranges for the said dimensions. Further, the length of tube may comprise one or more sections of substantially different interior and/or exterior diameters.

At least a part of the length of tube may have a preferred exterior diameter of approximately 20mm. At least a part of the length of tube may have a preferred interior diameter of approximately 14mm. Typically, said part forms a sampling section of said length of tube.

At least a part of the length of tube may have a preferred exterior diameter of approximately 8mm. At least a part of the length of tube may have a preferred interior diameter of approximately 6mm. Typically, said part forms a draw section of said length of tube.

In another example there is provided gas sampling means for use with a gas sampling system, said gas sampling means including: at least one length of tube; wherein at least part of the tube is formed from a porous material and characterised in that the porous material has a substantially even porosity along substantially the entire length of the same.

The sampling means includes at least one length of tube, wherein the tube is formed from a porous material and the tube has substantially even porosity along substantially the length of the tube.

According to another aspect of the present invention, there is provided a gas sampling system, the system including: a central control unit; and gas sampling means according to any of claims 1-11.

In one embodiment, said central control unit may comprise more than one gas sampling means connected thereto.

Said system may be provided as a portable system, for use in a plurality of locations and environments. Alternatively, said system may be provided fixed relative to a particular location or environment.

According to a further aspect of the present invention, there is provided a method of using a gas sampling system according to claims 12-13, said method including the steps of placing the length of tube in a particular area or region to be sampled; activating the central unit and subsequently creating a vacuum through the tube; drawing atmospheric samples evenly and consistently from the full surface area of the porous material the tube; and subsequently analysing said samples.

There is also provided a method of retrofitting existing gas sampling systems with a gas sampling means according to any of claims 1 to 11.

Embodiments of the present invention will now be described with reference to the accompanying figures, wherein:
Figure 1 illustrates a schematic of a gas sampling system having gas sampling means in accordance with an embodiment of the present invention.
Figure 2 illustrates various shapes, lengths and constructions of gas sampling means in accordance with an embodiment of the present invention.

The present invention addresses the problem of providing a gas sampling means that can draw atmospheric samples evenly and consistently along substantially its entire length.

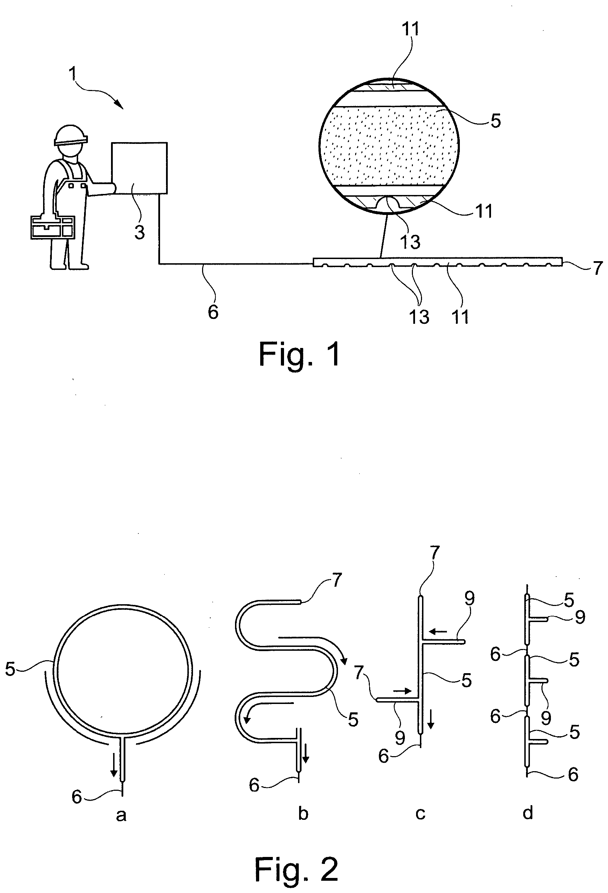

Referring firstly to Figure 1, there is provided a schematic view of a sampling system 1 used to sample atmospheric conditions in a particular area or region. The system 1 comprises two main sections: a central control unit 3, which includes a CPU and calculates/monitors the levels of gases present in the detection area, subsequently providing read-outs, warnings and/or the like to a user concerning that particular detection area; and gas sampling means in the form of a tubular draw line 6 (where used), a sample line 5 and a vacuum pump (not shown). The vacuum pump may be included within the control unit 3 or connected thereto, wherein the vacuum pump ultimately connects to the sample line 5 and acts upon it, drawing air therethrough. The sample line 5 is formed from a length of tube and, at one end via the draw line 6, is connected to the control unit 3 or vacuum pump. The draw line 6 is formed from a non-porous material such as nylon and can vary in length and diameter according to the specific requirements of the environment which is to be sampled. However, the diameter of the draw line 6 is less than that of the sample line 5. The line 5 is formed from a porous material, which has an even porosity distributed across the entire length and surface area of the line 5. Forming the sample line 5 from a porous material has distinct advantages over the methods used in the prior art because the porosity of the tube ensures, when a vacuum is applied thereto, not only that intakes are provided along substantially the entire length of the tube resulting in samples being taken from the entire area as opposed to a single point, but also that the air/gas intake at all the intake points is balanced and even, thereby provided a far more accurate reading to a user when sampling a particular area. As well as being formed from a porous material, the sample line 5 is also flexible allowing it to bend, curl etc. in order to fit into or access a much increased range of sample areas compared to the methods employed in the prior art. When a sample line 5 is used that has a second end 7 that is not connected to the control unit 3 or vacuum pump (i.e. does not form a closed system), blocking means in the form of a stub or a butt are provided in the second end 7, which prevent mass intake of air at an otherwise open end of the tube (such as that provided in point sampling). Blocking the end 7 of the sample line 5 that is not connected to the central unit 3 or vacuum ensures that the vacuum, when applied, is applied evenly throughout the interior of the sample line 5. This subsequently allows gas to be drawn in from its exterior through the porous material of which it is constructed at an even rate across substantially its entire length.

The sample line 5 can be constructed and/or provided in various lengths to suit the requirements of a user. The added advantage of using such a flexible, porous material for the sample line 5 is that it's length can be significantly longer than those provided for in the prior art. For example, it may have a length upward of 200 metres. The primary factor limiting the length is the power of the vacuum pump. An increased length means more air to be removed and, thus, a more powerful vacuum is required. As well as being variable in length, the sample line 5 can also include one or more branches or junctions 9 extending therefrom, as depicted in Figures 2c and d. The provision of such branches and junctions 9 in the sample line 5 provides access to an increased and/or separate area or areas for sampling. As described above for a second end 7 of the sample line 5, stubs or butts are provided in the ends of each of the branches or junctions 9 to prevent any mass intake of air/gas etc. In an alternative embodiment, as depicted in Figure 2a, the sample line 5 may be provided as having a continuous loop or loops incorporated into its length, meaning that there is no open second end present and, thus, a closed system on which the vacuum may operate is provided.

The porous material forming the sample line 5 has a pore size ranging between approximately 0.2nm and 1000nm. Various forms of the sample line 5 may be constructed, depending on the particular use, atmosphere, environment etc. that is to be samples. As such the porous material can be a microporous material, having a pore size of between 0.2nm and 2nm; a mesoporous material, having a pore size of between 2nm and 50nm; or a macroporous material, having a pore size of between 50nm and 1000nm. These size ranges and their definitions are consistent with those defined in J Rouqueral et al. Pure & Appl. Chem., Vol. 66, No. 8, pp1739-1758, 1994. Preferably, the porous material has a pore size of between 0.01µm and 1000µm. More preferably the porous material has a pore size of between 1µm and 1000µm. The size of the pore provided in the sample line 5 will depend somewhat on the use for which the system 1 is intended. For example, a sample line 5 with pores of a smaller size would be used where smaller systems and vacuum pumps are used for portable equipment, typically for environmental monitoring. Sample lines 5 with larger pore sizes would be used more frequently in fixed systems with larger pumps, which would typically be used in fire and/or smoke detection.

As an additional feature, the sample line 5 is provided with or in a protective barrier in the form of an outer sheath 11, as shown in Figure 1. The sheath 11 is provided to extend along at least a part of the sample line 5, depending on the requirements of the environment in which it is to be located. The outer sheath 11 can extend along the entire length of the sample line 5, or in some embodiments a number of sheaths 11 may be provided to protect the sample line 5 at various sections of it. The outer sheath 11 is of a tubular form and has an interior diameter greater than an exterior diameter of the sample line 5. Furthermore, the sheath 11 is provided with a plurality of holes 13 located therealong. The outer sheath 11 therefore provides a protective barrier for the sample line 5 it is to be located in areas where such protection may be required. This helps to prevent or at least significantly reduce the likelihood of loose debris or other material at least partially crushing the line 5, which may inhibit the vacuum being applied to the line 5 and, consequently, the ability to draw in samples from the surrounding atmosphere evenly across substantially the line 5. Furthermore, the outer sheath 11 is provided with an interior diameter greater than an exterior diameter of the sample line 5 and a plurality of holes 13 are located therealong such that it does not inhibit the intake of a sample from the surrounding atmosphere. The holes 13 are variable in shape and size to accommodate the particular environment into which the sample line 5 is to be located. The sheath 11 is typically formed from a rigid plastics material in various lengths, shapes and/or sizes appropriate to the length of the sample line 5 to be used and the environment into which it is to be located.

The sample line 5 may be constructed from two or more lengths of tube, which may be connected to one another in series or sequence either directly or via additional draw lines 6, as depicted in Figure 2d. The provision of the ability to connect two or more lengths of tube together allows a user to increase the length of the sample line 5 and, consequently, the area that may be sampled, without the need to source a specifically extended sample line 5 formed from a single piece of tubing. Furthermore, two or more lengths of tube can be connected to one another to form one or more branches or junctions 9, forming a network of a sample line 5. Individual lengths of tube that form the sample line 5 can be connected to one another via specific connecting portions. The connecting portions can be provided in a number of shapes, such as substantially I, T, Y, X, + shape and/or the like, which allow for simple extension of the length of the sample line 5 and also the inclusion of branches or junctions 9, or even the formation of a closed loops system, as depicted in Figure 2a. The sample line 5 has a preferred exterior diameter of approximately 20mm and a preferred interior diameter of approximately 14mm. Further, the draw line 6, which will have interior and exterior diameters less than those of the sample line 5 has a preferred exterior diameter of approximately 8mm and a preferred interior diameter of approximately 6mm.

It will be appreciated that the sample line 5 described above, together with its ancillary features may form part of a larger gas sampling system 1 or be provided individually to retrofit existing gas sample systems that have older and/or inferior sample lines such as, for example, those described in the prior art. In theory, one may also provide a gas sampling system that has more than one sample line attached thereto. This would further increase the range and area of the environment that is to be sampled. Therefore, the present invention provides gas sampling means in the form of a sample line 5 for use with a gas sampling system 1, made from a porous material into which a continuous vacuum may be applied, drawing atmospheric samples evenly and consistently from the full surface area of the sample line 5, thereby enabling reliable sampling along substantially its entire length, significantly improving upon those which currently exist in the prior art.

## Claims

1. Gas sampling means for use with a gas sampling system (1), said gas sampling means provided to sample atmospheric conditions in a particular area or region, and including:
a vacuum pump;
at least one sample tube (5);
means to connect at least a first end of said sample tube to a central control unit (3) of a gas sampling system and/or the vacuum pump;
wherein the sample tube (5) is formed from a porous and flexible material and wherein the porous material has an even porosity along its length and surface area, such that upon application of a vacuum thereto, the drawing of even and consistent atmospheric samples from the full surface area is permitted.

2. Gas sampling means according to claim 1, wherein a second or distal end (7) of the sample tube (5) is provided with blocking means to prevent mass intake of air.

3. Gas sampling means according to claim 1, wherein the sample tube (5) includes one or more branches, junctions and/or the like (9) extending therefrom.

4. Gas sampling means according to claim 3, wherein ends of the branches, junctions and or the like (9) are provided with blocking means.

5. Gas sampling means according to claim 1, wherein the sample tube (5) is provided as having a continuous loop or loops incorporated into its length.

6. Gas sampling means according to claim 1, wherein the porous material forming the sample tube (5) has a pore size of between 0.2nm and 1000µm.

7. Gas sampling means according to claim 1, wherein said gas sampling means are provided with protecting means (11), extending along at least a part thereof.

8. Gas sampling means according to claim 7, wherein said protecting means (11) is of a tubular form, having an interior diameter greater than or substantially equal to an exterior diameter of the at least one sample tube (5).

9. Gas sampling means according to claim 1, wherein the gas sampling means includes two or more sections of sample tube (5).

10. Gas sampling means according to claim 1, wherein said gas sampling means further comprises a tubular draw line (6).

11. Gas sampling means according to claim 10, wherein said tubular draw line (6) is formed from a non-porous material.

12. A gas sampling system (1), the system including:
a central control unit (3); and
a gas sampling means according to any of claims 1-11.

13. A gas sampling system (1) according to claim 12, wherein said central control unit (3) includes more than one gas sampling means connected thereto.

14. A method of using a gas sampling system (1) according to claims 12-13 including the steps of placing the at least one sample tube (5) in a particular area or region to be sampled; activating the central control unit (3) and subsequently creating a vacuum through the sample tube (5); drawing atmospheric samples evenly and consistently from the full surface area of the porous material the sample tube (5); and subsequently analysing said samples.

## Patentansprüche

1. Gasprobenahmemittel zur Verwendung mit einem Gasprobenahmesystem (1), wobei das genannte Gasprobenahmemittel zur Probenahme in atmosphärischen Bedingungen in einem bzw. einer besonderen Bereich oder Region vorgesehen ist und Folgendes aufweist:
eine Vakuumpumpe;
wenigstens ein Probenrohr (5);
ein Mittel zum Verbinden von wenigstens einem ersten Ende des genannten Probenrohrs mit einer zentralen Steuereinheit (3) eines Gasprobenahmesystems und/oder der Vakuumpumpe;
wobei das Probenrohr (5) aus einem porösen und flexiblen Material hergestellt ist und wobei das poröse Material entlang seiner Länge und Oberfläche eine gleichmäßige Porosität hat, so dass bei Anwenden eines Vakuums darauf das Ziehen gleichmäßiger und einheitlicher atmosphärischer Proben von der vollständigen Oberfläche zugelassen wird.

2. Gasprobenahmemittel nach Anspruch 1, wobei ein zweites oder distales Ende (7) des Probenrohrs (5) mit einem Sperrmittel versehen ist, um eine Massenansaugung von Luft zu verhindern.

3. Gasprobenahmemittel nach Anspruch 1, wobei das Probenrohr (5) ein oder mehr Verzweigungen, Anschlussstellen und/oder dergleichen (9) aufweist, die sich davon erstrecken.

4. Gasprobenahmemittel nach Anspruch 3, wobei Enden der Abzweigungen, Anschlussstellen und/oder dergleichen (9) mit einem Sperrmittel versehen sind.

5. Gasprobenahmemittel nach Anspruch 1, wobei das Probenrohr (5) als (eine) in seine Länge eingebundene Endlosschleife oder -schleifen aufweisend vorgesehen ist.

6. Gasprobenahmemittel nach Anspruch 1, wobei das poröse Material, das das Probenrohr (5) bildet, eine Porengröße zwischen 0,2 nm und 1000 µm hat.

7. Gasprobenahmemittel nach Anspruch 1, wobei die genannten Gasprobenahmemittel mit einem Schutzmittel (11) versehen sind, das sich an wenigstens einem Teil davon entlang erstreckt.

8. Gasprobenahmemittel nach Anspruch 7, wobei das genannte Schutzmittel (11) eine rohrförmige Form hat, die einen Innendurchmesser hat, der im Wesentlichen so groß wie ein Außendurchmesser des wenigstens einen Probenrohrs (5) oder größer ist.

9. Gasprobenahmemittel nach Anspruch 1, wobei das Gasprobenahmemittel zwei oder mehr Probenrohr- (5) -abschnitte aufweist.

10. Gasprobenahmemittel nach Anspruch 1, wobei das genannte Gasprobenahmemittel ferner eine rohrförmige Ziehleitung (6) aufweist.

11. Gasprobenahmemittel nach Anspruch 10, wobei die genannte rohrförmige Ziehleitung (6) aus einem nichtporösen Material hergestellt ist.

12. Gasprobenahmesystem (1), wobei das System Folgendes aufweist:
eine zentrale Steuereinheit (3); und
ein Gasprobenahmemittel nach einem der Ansprüche 1 bis 11.

13. Gasprobenahmesystem (1) nach Anspruch 12, wobei die genannte zentrale Steuereinheit (3) mehr als ein damit verbundenes Gasprobenahmemittel aufweist.

14. Verfahren zur Verwendung eines Gasprobenahmesystems (1) nach Anspruch 12 oder 13, das die folgenden Schritte aufweist: Legen des wenigstens einen Probenrohrs (5) in einem bzw. einer besonderen Bereich oder Region, von dem bzw. der Proben zu nehmen sind; Aktivieren der zentralen Steuereinheit (3) und danach Herstellen eines Vakuums durch das Probenrohr (5); gleichmäßiges und einheitliches Ziehen atmosphärischer Proben von der vollständigen Oberfläche des porösen Materials des Probenrohrs (5); und danach Analysieren der genannten Proben.

## Revendications

1. Moyens d'échantillonnage de gaz pour une utilisation avec un système d'échantillonnage de gaz (1), lesdits moyens d'échantillonnage de gaz étant prévus pour échantillonner des conditions atmosphériques dans une région ou zone particulière, et incluant :
une pompe à vide ;
au moins un tube d'échantillon (5) ;
des moyens pour raccorder au moins une première extrémité dudit tube d'échantillon à une unité de commande centrale (3) d'un système d'échantillonnage de gaz et/ou de la pompe à vide ;
dans lesquels le tube d'échantillon (5) est formé à partir d'un matériau poreux et flexible, et le matériau poreux ayant une porosité uniforme le long de sa longueur et de sa superficie, de telle sorte que lors de l'application d'un vide à celui-ci, l'aspiration d'échantillons atmosphériques uniformes et constants à partir de la superficie toute entière soit permise.

2. Moyens d'échantillonnage de gaz selon la revendication 1, dans lesquels une deuxième extrémité ou une extrémité distale (7) du tube d'échantillon (5) est munie de moyens de blocage afin d'empêcher une admission massique d'air.

3. Moyens d'échantillonnage de gaz selon la revendication 1, dans lesquels le tube d'échantillon (5) inclut une ou plusieurs branches, jonctions et/ou similaires (9) qui s'étendent à partir de celui-ci.

4. Moyens d'échantillonnage de gaz selon la revendication 3, dans lesquels des extrémités de branches, jonctions et/ou similaires (9) sont munies de moyens de blocage.

5. Moyens d'échantillonnage de gaz selon la revendication 1, dans lesquels le tube d'échantillon (5) est prévu comme ayant une boucle ou des boucles continue(s) qui est/sont incorporée(s) dans sa longueur.

6. Moyens d'échantillonnage de gaz selon la revendication 1, dans lesquels le matériau poreux formant le tube d'échantillon (5) a une taille de pore située entre 0,2 nm et 1000 µm.

7. Moyens d'échantillonnage de gaz selon la revendication 1, lesdits moyens d'échantillonnage de gaz étant munis d'un moyen de protection (11), s'étendant le long d'au moins une partie de ceux-ci.

8. Moyens d'échantillonnage de gaz selon la revendication 7, dans lesquels ledit moyen de protection (11) a une forme tubulaire, qui possède un diamètre intérieur plus grand que ou substantiellement égal à un diamètre extérieur de l'au moins un tube d'échantillon (5).

9. Moyens d'échantillonnage de gaz selon la revendication 1, les moyens d'échantillonnage de gaz incluant deux ou plusieurs sections du tube d'échantillon (5).

10. Moyens d'échantillonnage de gaz selon la revendication 1, lesdits moyens d'échantillonnage de gaz comprenant en outre une ligne d'aspiration tubulaire (6).

11. Moyens d'échantillonnage de gaz selon la revendication 10, dans lesquels ladite ligne d'aspiration tubulaire (6) est formée à partir d'un matériau non poreux.

12. Système d'échantillonnage de gaz (1), le système incluant :
une unité de commande centrale (3) ; et
un moyen d'échantillonnage de gaz selon n'importe lesquelles des revendications 1-11.

13. Système d'échantillonnage de gaz (1) selon la revendication 12, dans lequel ladite unité de commande centrale (3) inclut plus d'un moyen d'échantillonnage de gaz raccordé à celle-ci.

14. Procédé d'utilisation d'un système d'échantillonnage de gaz (1) selon les revendications 12-13 incluant les étapes de placement de l'au moins un tube d'échantillon (5) dans une région ou zone particulière destinée à être échantillonnée ; l'activation de l'unité de commande centrale (3) et ultérieurement la création d'un vide à travers le tube d'échantillon (5) ; l'aspiration d'échantillons atmosphériques de manière uniforme et constante à partir de la superficie toute entière du matériau poreux du tube d'échantillon (5) ; et ultérieurement l'analyse desdits échantillons.
